**Europäisches Patentamt**

**European Patent Office**

**Office européen des brevets**

(11) Veröffentlichungsnummer: **0 234 471**
**A2**

(12) # EUROPÄISCHE PATENTANMELDUNG

(21) Anmeldenummer: **87102162.2**

(22) Anmeldetag: **16.02.87**

(51) Int. Cl.4: **G01N 30/60** , B01D 15/08

(30) Priorität: **28.02.86 DE 3606474**

(43) Veröffentlichungstag der Anmeldung:
**02.09.87 Patentblatt 87/36**

(84) Benannte Vertragsstaaten:
**BE CH DE FR GB IT LI NL**

(71) Anmelder: **Merck Patent Gesellschaft mit beschränkter Haftung**
**Frankfurter Strasse 250**
**D-6100 Darmstadt(DE)**

(72) Erfinder: **Wermuth, Stefan, Dr.**
**Wegscheide 3**
**D-6100 Darmstadt(DE)**
Erfinder: **Hauke, Günter**
**Im Seegraben 11**
**D-6109 Mühltal 2(DE)**
Erfinder: **Kreher, Klaus**
**Bahnhofsplatz 22**
**D-6115 Münster(DE)**

(54) **Chromatographievorsäule.**

(57) Die Anmeldung betrifft eine Vorsäule für eine Chromatographiesäule in Kartuschen-Form, die mit einem Sorbens befüllt und mit Fritten-und Dichtelementen versehen ist, wobei die Vorsäule zusammengesetzt ist aus einer äußeren Halterung (1) und einem darin einsetzbaren inneren, mit Sorbens befüllten Säulenring (2).

EP 0 234 471 A2

## Chromatographievorsäule

Die Anmeldung betrifft eine Vorsäule für eine Chromatographiesäule in Kartuschen-Form, die mit Sorbens befüllt und mit Fritten-und Dichtelementen versehen ist.

Als Chromatographiesäulen insbesondere für die Hochdruckflüssigchromatographie werden in der Regel aus rostfreiem Stahl gefertigte Säulenrohre verwendet, die an beiden Enden mit Verschraubungen und Kapillaranschlüssen zur Zu- und Abfuhr des Eluens versehen sind.

In neuerer Zeit werden auch vermehrt Säulen-Kartuschen eingesetzt, die über keine Verschraubungen verfügen, sondern bei denen das mit Fritten-und Dichtelementen verschlossene und mit Sorbens gefüllte Säulenrohr entweder in einer Kartuschenhalterung wie z. B. in der DOS 29 30 962, der DOS 30 21 306 oder dem US-Patent 4,283,280 beschrieben oder in einer Säuleneinspannvorrichtung entsprechend der DOS 31 43 075 eingespannt wird . Zum Schutz der eigentlichen Trennsäule vor Verschmutzung und Verstopfung wird häufig davor noch eine in der Regel sehr kurze Vorsäule eingesetzt.

Diese Vorsäulen sind in der Regel aus dem gleichen Material und mit dem gleichen Durchmesser gefertigt wie die Trennsäule und sind wie diese mit Frittenelementen und Dichtungen versehen, sind also bis auf den Umstand, daß sie sehr viel kürzer sind, wie die Trennsäulen selbst ausgeführt.

Da die Vorsäulen aufgrund ihrer Funktion als Abfänger für Schmutzpartikel und irreversibel an das Sorbens gebundene Verunreinigungen dienen und daher häufig ausgetauscht werden müssen, führt diese aufwendige und hochwertige Verarbeitung zu einer erheblichen finanziellen Belastung des Anwenders.

Andererseits muß jedoch die Vorsäule die gleichen hohen Anforderungen bezüglich Stabilität, Druckbelastbarkeit, Dichtigkeit und Maßgenauigkeit erfüllen wie die Trennsäule selbst, so daß hier trotz des Bedürfnisses nach einer preiswerteren Gestaltung der Vorsäulen keine Einsparungen bezüglich Material und Verarbeitung möglich schienen.

Es wurde nun jedoch gefunden, daß durch eine Aufteilung der Vorsäule in eine äußere Halterung und einen darin einsetzbaren Säulenring dieses Problem gelöst werden kann.

Gegenstand der Erfindung ist daher eine Vorsäule für eine Chromatographiesäule in Kartuschen-Form, die mit einem Sorbens befüllt und mit Fritten-und Dichtelementen versehen ist, die dadurch gekennzeichnet ist, daß die Vorsäule zusammengesetzt ist aus einer äußeren Halterung und einem darin einsetzbaren inneren,mit Sorbens befüllten Säulenring.

Eine bevorzugte Ausgestaltung der erfindungsgemäßen Vorsäule ist in den Zeichnungen dargestellt.

Figur I stellt einen Schnitt durch eine mit Sorbens befüllte Vorsäule dar.

Figur II zeigt im Schnitt die Einzelteile einer erfindungsgemäßen Vorsäule in Form einer Explosionszeichnung.

Mit 1 ist darin die äußere Halterung bezeichnet und mit 2 der Säulenring. 3 sind Dichtungen und 4 sind Frittenelemente. 5 ist ein Dichtring, 6 ist das Sorbens und mit 7 sind Bohrungen zum Durchlassen des Eluens bezeichnet.

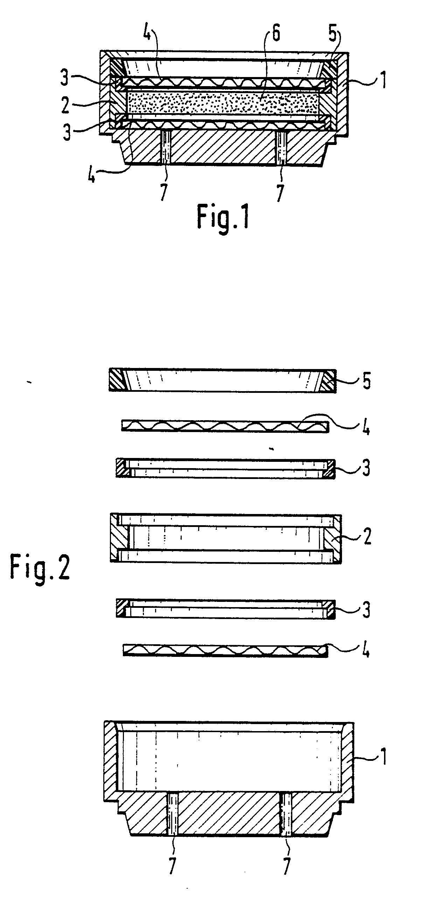

Die erfindungsgemäße Vorsäule wird wie die bekannten Vorsäulen unmittelbar auf die in den Zeichnungen nicht gezeigte Trennsäule aufgesetzt. Die der Trennsäule zugewandte Seite der Vorsäule ist dazu üblicherweise so ausgebildet, daß diese mit an der Trennsäule befindlichen Dichtelementen dichtend zusammenwirkt. In gleicher Weise ist die der Reduzierverschraubung mit Kapillaranschlüssen bzw. der Kartuschen-Endverschraubung zugewandte Seite der Vorsäule so mit Dichtelementen ausgerüstet, daß mit dem konusförmigen Ende der Reduzierverschraubung bzw. der Kartuschen-Endverschraubung eine Abdichtung erzielt wird. Dieses bekannte Prinzip wird auch bei der erfindungsgemäßen Vorsäule angewendet, so daß also vorzugsweise das in der Zeichnung obere Ende der Vorsäule analog dem oberen Ende der Trennsäule und das in der Zeichnung untere Ende der Vorsäule analog dem unteren Ende der Reduzierverschraubung bzw. Kartuschen-Endverschraubung ausgestaltet ist.

Der entscheidende Vorteil der erfindungsgemäßen Vorsäule gegenüber üblichen Vorsäulen besteht jedoch darin, daß bei einem notwendig werdenden Austausch der Vorsäule nicht die komplette Vorsäule erneuert werden muß,sondern nur der Säulenring (2) mit den Dichtungen (3) und Frittenelementen (4), der das Sorbens (6) enthält. Dieser Austausch kann vom Anwender selbst sehr leicht vorgenommen werden. Nach Entfernen des Dichtrings (5) kann der in die äußere Halterung (1) eingelegte Säulenring (2) ohne weiteres entfernt werden. Nach Einlegen eines mit frischem Sorbens gefüllten Säulenrings (2) und des Dichtrings (5) ist die Vorsäule wieder einsatzbereit. Um einen mit Sorbens gefüllten Säulenring (2) problemlos lagern und handhaben zu können, ist dieser vorzugsweise mit Dichtungen (3) und Frittenelementen (4) verschlossen.

Der Anwender muß also die äußere Halterung - (1),die bezüglich Stabilität, Maßgenauigkeit und Material analog den bekannten Vorsäulen relativ aufwendig gefertigt sein muß, nur ein einziges Mal anschaffen und hat als Verbrauchsartikel nur den relativ preiswerten Säulenring (2) zu kalkulieren.

Die erfindungsgemäße Vorsäule kann in beliebigen Längen und Durchmessern gefertigt werden und wird in dieser Hinsicht ganz auf die Trennsäule abgestimmt. Üblich sind z. B. Durchmesser von wenigen Millimetern bis hin zu 50-100 cm oder mehr bei präparativen Säulen. Auch die Länge der Vorsäule kann frei gewählt werden und liegt in der Regel so, daß die Sorbensschüttung (6) eine Höhe von etwa 10-100 mm besitzt.

Für die erfindungsgemäße Vorsäule werden die auch für Trennsäulen bzw. die üblichen Vorsäulen eingesetzten Materialien verwendet. So wird für die äußere Halterung (1) und den Säulenring (2) insbesondere rostfreier Stahl verwendet, während die Dichtungen (3) und der Dichtring (5) vorzugsweise aus inerten Polymeren wie z. B. PTFE gefertigt werden und die Frittenelemente - (4) z. B. aus Sintermetall, Keramik oder Gewebe bestehen können.

Es steht damit eine vorteilhafte neue Vorsäule für die Chromatographie zur Verfügung.

**Ansprüche**

1. Vorsäule für eine Chromatographiesäule in Kartuschen-Form, die mit einem Sorbens befüllt und mit Fritten-und Dichtelementen versehen ist, dadurch gekennzeichnet, daß die Vorsäule zusammengesetzt ist aus einer äußeren Halterung und einem darin einsetzbaren inneren,mit Sorbens befüllten Säulenring.

2. Vorsäule nach Anspruch 1 dadurch gekennzeichnet, daß der Säulenring beidseitig mit Frittenelementen verschlossen ist.

Fig.1

Fig.2